# EUROPÄISCHE PATENTSCHRIFT

(11) **EP 3 347 609 B1**
(45) Veröffentlichungstag und Bekanntmachung des Hinweises auf die Patenterteilung: **24.04.2019**
(21) Anmeldenummer: 16774629.6
(22) Anmeldetag: 09.09.2016
(51) Int. Cl.: F16C 17/03, F16C 17/06, F16C 33/20, F16C 33/28, C08J 5/04

(54) **KIPPSEGMENT UND KIPPSEGMENTGLEITLAGER**
TILTING SEGMENT AND TILTING SEGMENT SLIDING BEARING
SEGMENT BASCULANT ET PALIER LISSE À SEGMENT BASCULANT

(30) Priorität: 11.09.2015 DE 102015115385
(43) Veröffentlichungstag der Anmeldung: 18.07.2018
(73) Patentinhaber: Miba Industrial Bearings Germany GmbH, 37079 Göttingen (DE)
(72) Erfinder: HENSSLER, Dieter, 87549 Rettenberg (DE); KLEIN, Uwe, 37130 Gleichen (DE)
(74) Vertreter: Schneider, Peter Christian
(86) Internationale Anmeldenummer: PCT/EP2016/071281
(87) Internationale Veröffentlichungsnummer: WO 2017/042322

(56) Entgegenhaltungen:
- EP-A1- 1 227 254
- DE-A1-102013 201 782
- JP-A- S58 160 346
- JP-A- 2003 028 146
- JP-A- 2003 264 984
- US-A1- 2010 056 695
- US-A1- 2013 195 388

## Beschreibung

### Gebiet der Erfindung

Die Erfindung betrifft ein Kippsegment für ein Kippsegmentgleitlager mit einem Segmentkörper zur Aufnahme von Lagerkräften, wobei der Segmentkörper aus einem faserverstärkten Verbundwerkstoff ausgebildet ist.

Die Erfindung betrifft weiterhin ein Kippsegmentgleitlager mit einer Mehrzahl von an einem Tragring angeordneten Kippsegmenten.

### Stand der Technik

Aus der EP 2 653 736 A1 ist ein Kippsegment für ein Kippsegmentgleitlager mit einem Segmentkörper zur Aufnahme von Lagerkräften bekannt, wobei der Segmentkörper aus einem faserverstärkten Verbundwerkstoff ausgebildet ist. Alternativ wird dabei vorgeschlagen, den Segmentkörper aus einem thermoplastischen Kunststoff, insbesondere ein Polyetherketon, die im Speziellen auch die Polyetheretherketone enthalten, auszubilden. Als nachteilig hat sich erwiesen, dass weder die bekannten faserverstärkten Verbundwerkstoffe noch thermoplastische Kunststoffe, insbesondere Polyetherketone oder Polyetheretherketone ausreichende Festigkeitswerte und Laufeigenschaften aufweisen.

Weiterhin ist aus der DE 10 2013 201 782 A1 eine Gleitbuchse für ein Radialgleitlager bekannt, die aus einem Verbundwerkstoff ausgebildet ist, der neben Polyetheretherketon (PEEK) noch Potassium Titanat Whisker (PTW) und Verstärkungsfasern, bevorzugt Kohlefasern, aufweist. Das Potassium Titanat hat dabei bevorzugt die Summenformel K₂Ti₆O₁₃. Die Verstärkungsfasern (Kohlefasern/Carbonfasern) sollen dabei einen Gewichtsanteil zwischen 10 und 20 % aufweisen.

Nachteilig bei dem PTW-Fasern ist, dass sie bereits 2005 von der WHO aufgrund ihrer im Mikrometerbereich liegenden Abmessungen als gesundheitsgefährdet eingestuft wurden. Insofern sollte auf die PTW-Fasern verzichtet werden.

Auch bei diesem bekannten Verbundwerkstoff ist nachteilig, dass die Festigkeitswerte und Laufeigenschaften, insbesondere bezüglich der Ausbildung der Segmentkörper von Kippsegmenten und deren Gleiteigenschaften noch weiter - auch im Hinblick auf gesundheitsschädliche Bestandteile - zu verbessern sind.

Aus der JP 2003 028 146 A ist ein Kippsegment für ein Kippsegmentgleitlager zur Aufnahme von Lagerkräften bekannt, das einen Segmentkörper mit einer Beschichtung aus einem faserverstärkten Verbundwerkstoff aus Carbonfasern und einem Polyetheretherketon umfasst.

Nachteilig bei einem Segmentkörper mit einer durch Beschichtung hergestellten Gleitfläche ist, dass die Beschichtung relativ aufwendig und kostenintensiv ist.

Weiterhin ist aus der DE 10 2005 009 552 A1 ein Gleit- oder Reiblager mit einer beschichteten Auflagestelle bekannt, deren Beschichtung Polyetherketon (PEK) oder Polyetheretherketon (PEEK) umfasst. Die Beschichtung kann dabei bis zu 50 Volumenprozent feinteilige Füllstoffe, z. Bsp. Kohlenstofffasern, umfassen. Die Schichtdicke soll dabei zwischen 10 µm und 1000 µm liegen.

Nachteilig ist auch hier, dass die Beschichtung relativ aufwendig und kostenintensiv ist. Bei beschichteten Körpern hängen der Festigkeitswerte des Körpers auch und vor allem von den Festigkeitswerten des Materials des beschichteten Grundkörpers ab.

### Aufgabenstellung

Es ist die Aufgabe der vorliegenden Erfindung, die bekannten Kippsegmente für Kippsegmentgleitlager und die Kippsegmentgleitlager bezüglich ihrer Festigkeits- und Laufeigenschaften kostengünstig und unter Vermeidung von gesundheitsgefährdetem Potassium Titanat Whisker (PTW) weiter zu verbessern.

### Darlegung der Erfindung

Diese Aufgabe wird in Verbindung mit den Merkmalen des Oberbegriffs von Anspruch 1 dadurch gelöst, dass der Verbundwerkstoff ein Polyetherketon umfasst, dass der Verbundwerkstoff Carbonfasern (Kohlenstofffasern) mit einem Gewichtsanteil von 25 bis 70 % als Verstärkungsfasern aufweist, und dass die Carbonfasern ein Gewebe bilden, das zur Gleitfläche des Segmentkörpers eine konturparallele Ausrichtung aufweist.

Überraschend hat sich gezeigt, dass bei einem Verbundwerkstoff aus Polyetherketon (PEK) und Carbonfasern die Kippsegmente ausreichende Festigkeitswerte und Lagereigenschaften und insbesondere einen geringeren Verschleiß aufweisen, soweit der Gewichtsanteil der Carbonfasern zwischen 25 bis 70 % liegt. Es hat sich weiterhin gezeigt, dass orthogonal zu der Gewebeebene die günstigen Gleiteigenschaften des Polyetherketons besonders zum Tragen kommen. Somit wirkt sich dies positiv auf die Eigenschaften der Gleitfläche aus. Dadurch dass die Carbonfasern ein Gewebe bilden, werden die Festigkeitswerte des gesamten, einteiligen Segmentkörpers erhöht.

Bevorzugt wurde ein Gewichtsanteil von 40 bis 60 % Carbonfasern als Verstärkungsfasern für die Erzielung von hohen Festigkeiten und Lagereigenschaften gefunden. Weiter bevorzugt hat sich ein Gewichtsanteil von 45 bis 55 % Carbonfasern als günstig erwiesen.

Als besonders günstig für die Festigkeits- und Lagereigenschaften der Kippsegmente hat sich ein Gewichtsanteil von 50 % an Carbonfasern erwiesen. Als besonders günstig hat sich auch erwiesen, anstelle von Polyetherketon Polyetheretherketon oder Polyacryletherketon in den Carbonfasern zu verwenden.

Nach einer bevorzugten Ausführungsform der Erfindung ist der Segmentkörper durch Kompression geformt und weist dadurch eine relativ hohe Dichte auf, die zu den guten Festigkeits- und Laufeigenschaften des Gleitlagers beiträgt.

Die Aufgabe bezüglich des Kippsegmentgleitlagers wird in Verbindung mit dem Oberbegriff des Anspruches 7 dadurch gelöst, dass die Kippsegmente nach einem der Ansprüche 1 bis 6 ausgebildet sind.

Dadurch, dass der Tragring des Kippsegmentgleitlagers die obigen Segmente aufweist, weist das Kippsegmentgleitlager auch die oben genannten Merkmale und Vorteile auf.

Gemäß einer bevorzugten Ausführungsform der Erfindung sind die Kippsegmente als Radialkippsegmente eines Radiallagers ausgebildet und weisen jeweils eine konkave Gleitfläche auf. Auch ist es möglich, die Kippsegmente als Axialkippsegmente eines Axiallagers auszubilden, wobei die Kippsegmente jeweils eine ebene Gleitfläche aufweisen.

Nach einer weiteren bevorzugten Ausführungsform der Erfindung weist die der Gleitfläche zugewandte Lauffläche eine harte Schutzschicht, z.B. aus Wolframkarbid mit Anteilen von Cobalt (Co) und Chrom (Cr), auf. Durch die Schutzschicht aus Wolframkarbid wird die Lauffläche eines rotierenden Lagerteiles, beispielsweise einer Welle oder einer Wellenscheibe, in ihren Laufeigenschaften insbesondere bezüglich eines Abriebes verbessert. Eine solche Schicht auf Basis von Wolframkarbid (WC) mit Anteilen von Cobalt (Co) und/oder Chrom (Cr) kann insbesondere durch Hochgeschwindigkeits-Flammspritzen (HVOF) aufgebracht werden.

Weitere Merkmale und Vorteile der Erfindung ergeben sich aus der nachfolgenden speziellen Beschreibung und den Zeichnungen, in denen bevorzugte Ausführungsformen der Erfindung beispielhaft veranschaulicht sind.

### Kurzbeschreibung der Zeichnungen

Es zeigen:

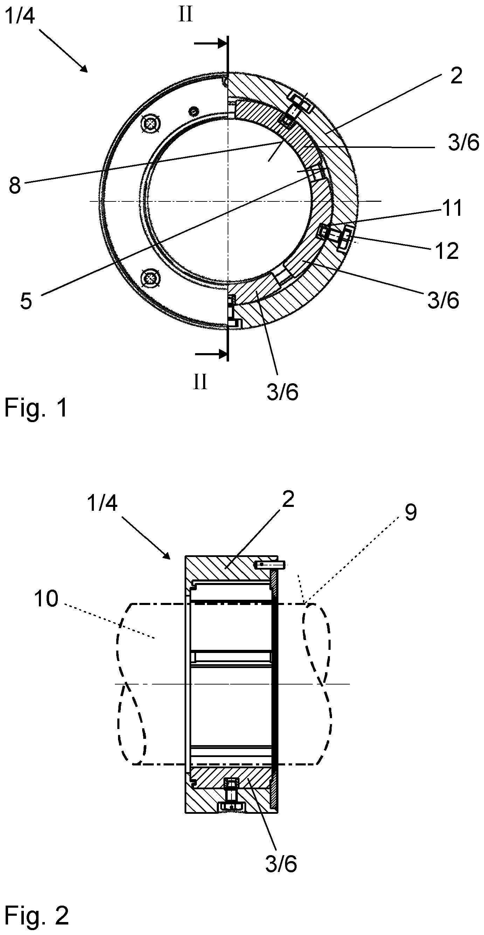

- Figur 1:: eine Vorderansicht im Halbschnitt des Kippsegmentgleitlagers, das als ein Radialgleitlager ausgebildet ist;
- Figur 2:: eine Seitenansicht des Kippsegmentgleitlagers von Figur 1 entlang der Linie II - II geschnitten mit gestrichelt angedeuteter Welle;

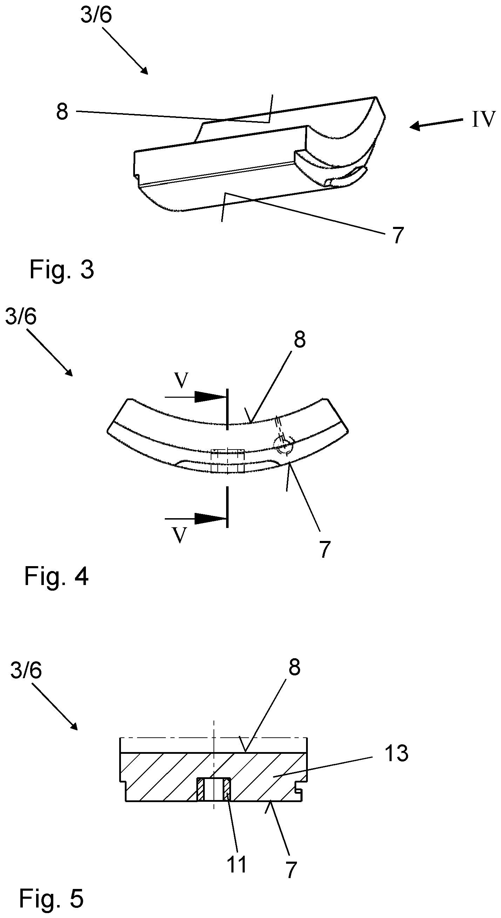

- Figur 3:: eine räumliche, vergrößerte Darstellung des Kippsegmentes von Figur 1, das als Radialkippsegment ausgebildet ist;
- Figur 4:: eine Vorderansicht des Kippsegmentes von Figur 3 aus Richtung IV;
- Figur 5:: eine Seitenansicht des Kippsegmentes von Figur 4 entlang der Linie V - V geschnitten;
- Figur 6:: eine Vorderansicht eines Kippsegmentgleitlagers, das als ein Axialgleitlager ausgebildet ist;
- Figur 7:: eine Vorderansicht in vergrößerter Darstellung des Kippsegments von Figur 6, das als ein Axialkippsegment ausgebildet ist;

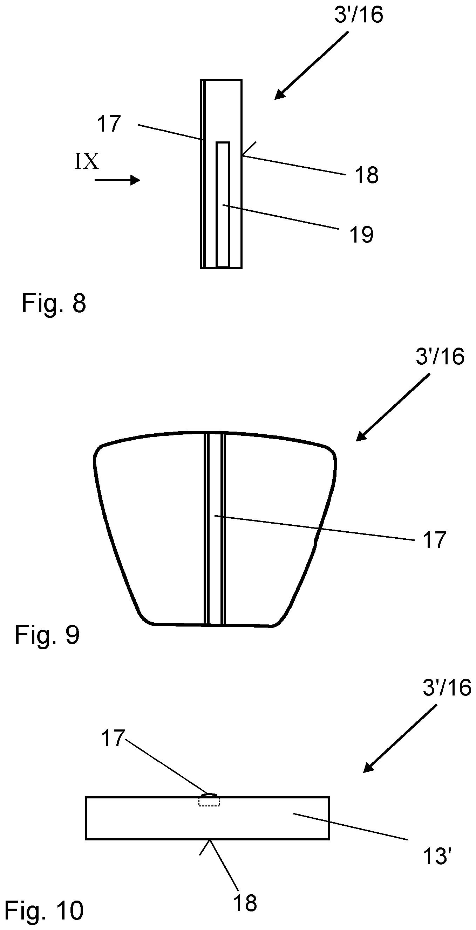

- Figur 8:: eine Seitenansicht des Kippsegmentes von Figur 7 aus Richtung VIII
- Figur 9:: eine Rückansicht des Kippsegmentes von Figur 8 aus Richtung IX;
- Figur 10:: eine Seitenansicht des Kippsegmentes von Figur 9 aus Richtung X und

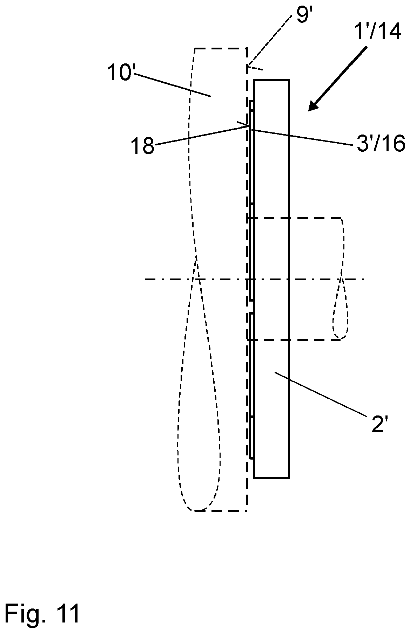

- Figur 11:: eine Seitenansicht des Kippsegmentgleitlagers von Figur 6 aus Richtung XI mit gestrichelt angeordnetem Wellenbund.

### Beschreibung bevorzugter Ausführungsformen

Ein Kippsegmentgleitlager 1 besteht im Wesentlichen aus einem Tragring 2 und einer Mehrzahl von Kippsegmenten 3.

Das Kippsegmentgleitlager 1 ist als ein Radiallager 4 ausgebildet, dessen Tragring 2 an seiner Innenfläche 5 eine Mehrzahl (im Beispiel fünf) von Kippsegmenten 3 aufweist. Entsprechend sind die Kippsegmente 3 als Radialkippsegmente 6 ausgebildet. Die Radialkippsegmente 6 weisen eine der Innenfläche 5 des Tragringes 2 zugewandte Außenfläche 7 auf, wobei der Radius der Außenfläche 7 des Radialkippsegmentes 6 kleiner ist als der Radius der Innenfläche 5 des Tragringes 2. Auf der der Außenfläche 7 abgewandten Innenseite weist das Radialkippsegment 6 eine Gleitfläche 8 auf. Die Gleitflächen 8 der Radialkippsegmente 6 stehen in Kontakt mit der Lauffläche 9 einer rotierenden Welle 10.

Das Radialkippsegment 6 weist ein Element 11 auf, über das es mittels einer Schraube 12 am Tragring 2 befestigt ist. Durch das Element 11 wird dem Radialkippsegment 6 die Möglichkeit zur einer Kippung gegeben.

Die Lauffläche 9 der rotierenden Welle 10 ist mit einer nicht weiter dargestellten Schutzschicht auf Basis von Wolframkarbid (WC) mit Anteilen von Cobalt (Co) und/oder Chrom (Cr) versehen.

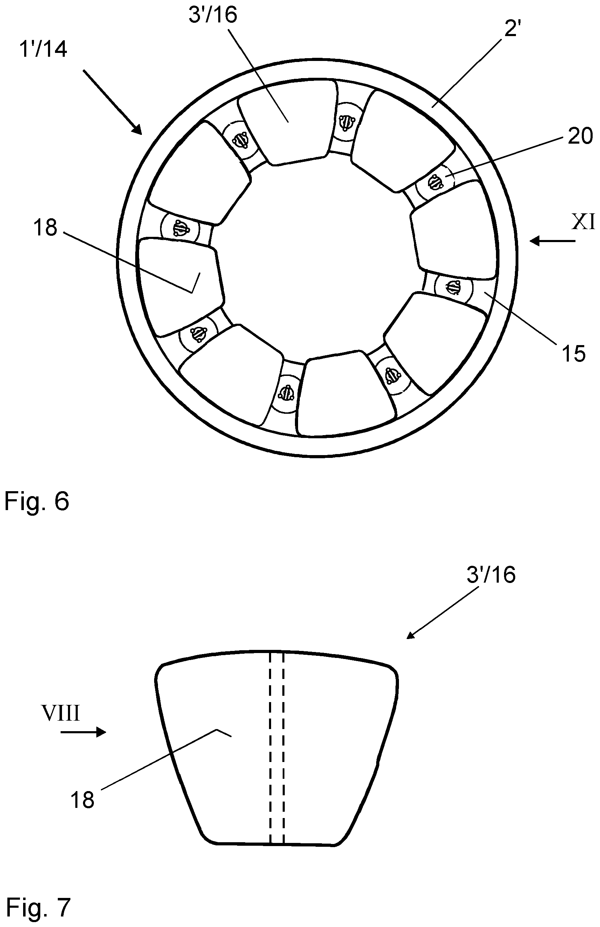

Das Ausführungsbeispiel der Figur 6 besteht aus einem Kippsegmentleitlager 1', einem Tragring 2' und einer Mehrzahl (im Beispiel acht) von Kippsegmenten 3'. Das Kippsegmentgleitlager 1' ist als Axiallager 14 ausgebildet, wobei der Tragring 2' eine ringförmige Rückwandung aufweist, an der die Kippsegmente 3', die als Axialkippsegmente 16 mit einem Steg 17 ausgebildet sind, anliegen. Das Axialkippsegment 16 weist auf seiner dem Steg 17 abgewandten Vorderseite eine ebene Gleitfläche 18 auf, die an einer ebenen Lauffläche 9' eines rotierenden Wellenbundes 10' anliegt. Die Axialkippsegmente 16 weisen seitliche Nuten 19 auf, in die an der Rückwandung 15, die eine Auflage für die Axialkippsegmente 16 bildet, angeordnete Sicherungselemente 20 eingreifen.

Die Lauffläche 9' des rotierenden Wellenbundes 10' ist mit einer nicht dargestellten Schutzschicht auf Basis von Wolframkarbid (WC) mit Anteilen von Cobalt (Co) und/oder Chrom (Cr) versehen.

Das Kippsegment 3 bildet ohne das Element 11 und die Schraube 12 den Segmentkörper 13. Das Kippsegment 3' bildet ohne den Steg 17 des Axialkippsegmentes 16 den Segmentkörper 13'.

Die Segmentkörper 13, 13' bestehen aus einem Verbundwerkstoff, der neben Carbonfasern Polyetheretherketon umfasst. Die Carbonfasern weisen dabei einen Gewichtsanteil von 50 % des Verbundwerkstoffes auf. Die Carbonfasern bilden dabei ein Gewebe, das zur Gleitfläche 8, 18 des Segmentkörpers 13, 13' eine konturparallele Ausrichtung aufweist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1, 1': Kippsegmentgleitlager
- 2, 2': Tragring
- 3, 3': Kippsegment
- 4: Radiallager
- 5: Innenfläche von 2
- 6: Radialkippsegment
- 7: Außenfläche von 6
- 8: Gleitfläche von 6
- 9: Lauffläche von 10
- 9': Lauffläche von 10'
- 10: Welle
- 10': Wellenbund
- 11: Element von 6
- 12: Schraube
- 13, 13': Segmentkörper
- 14: Axiallager von 1'
- 15: Rückwandung von 14
- 16: Axialkippsegment
- 17: Steg von 16
- 18: Gleichfläche von 16
- 19: Nut von 16
- 20: Sicherungselement

## Patentansprüche

1. Kippsegment (3, 3') für ein Kippsegmentgleitlager (1, 1') mit einem Segmentkörper (13, 13') zur Aufnahme von Lagerkräften, wobei der Segmentkörper (13, 13') aus einem faserverstärkten Verbundwerkstoff ausgebildet ist,
wobei der Verbundwerkstoff ein Polyetherketon umfasst, **dadurch gekennzeichnet, dass**
der Verbundwerkstoff Carbonfasern mit einem Gewichtsanteil von 25 bis 70 % als Verstärkungsfasern aufweist, und
dass die Carbonfasern ein Gewebe bilden, das zur Gleitfläche (8, 18) des Segmentkörpers (13, 13') eine konturparallele Ausrichtung aufweist.

2. Kippsegment nach Anspruch 1,
**dadurch gekennzeichnet,**
**dass** der Verbundwerkstoff Carbonfasern mit einem Gewichtsanteil von 40 bis 60 % als Verstärkungsfasern aufweist.

3. Kippsegment nach Anspruch 2,
**dadurch gekennzeichnet,**
**dass** der Verbundwerkstoff Carbonfasern mit einem Gewichtsanteil von 45 bis 55 % als Verstärkungsfasern aufweist.

4. Kippsegment nach Anspruch 3,
**dadurch gekennzeichnet,**
**dass** der Verbundwerkstoff Carbonfasern mit einem Gewichtsanteil von 50 % aufweist.

5. Kippsegment nach einem der Ansprüche 1 bis 4,
**dadurch gekennzeichnet,**
**dass** der Verbundwerkstoff neben Carbonfasern Polyetheretherketon oder Polyacryletherketon umfasst.

6. Kippsegment nach einem der Ansprüche 1 bis 5,
**dadurch gekennzeichnet,**
**dass** der Segmentkörper (13, 13') durch Kompression geformt ist.

7. Kippsegmentgleitlager (1, 1') mit einer Mehrzahl von an einem Tragring (2, 2') angeordneten Kippsegmenten (3, 3'),
**dadurch gekennzeichnet,**
**dass** die Kippsegmente (3, 3') nach einem der Ansprüche 1 bis 6 ausgebildet sind.

8. Kippsegmentgleitlager nach Anspruch 7,
**dadurch gekennzeichnet,**
**dass** die die Kippsegmente (3) als Radialkippsegmente (6) eines Radiallagers (4) ausgebildet sind und jeweils eine konkave Gleitfläche (8) aufweisen.

9. Kippsegmentgleitlager nach Anspruch 7,
**dadurch gekennzeichnet,**
**dass** die die Kippsegmente (3') als Axialkippsegmente (16) eines Axiallagers (14) ausgebildet sind und jeweils eine ebene Gleitfläche (18) aufweisen.

10. Kippsegmentgleitlager nach einem der Ansprüche 7 bis 9,
**dadurch gekennzeichnet,**
**dass** die der Gleitfläche (8, 18) zugewandte Lauffläche (9, 9') einer rotierenden Welle (10) oder Wellenbund (10') eine harte Schutzschicht aufweist.

11. Kippsegmentgleitlager nach Anspruch 10,
**dadurch gekennzeichnet,**
**dass** die Schutzschicht aus einem Wolframkarbid mit Anteilen von Cobalt und Chrom ausgebildet ist.

## Claims

1. A tilting segment (3, 3') for a tilting segment sliding bearing (1, 1') having a segment body (13, 13') for receiving bearing forces, wherein the segment body (13, 13') is made of a fiber-reinforced composite material,
wherein the composite material comprises a polyether ketone,
**characterized in that**
the composite material has carbon fibers having a weight proportion of 25% to 70% as reinforcement fibers, and
that the carbon fibers form a fabric that has a contour-parallel orientation to the sliding surface (8, 18) of the segment body (13, 13').

2. The tilting segment according to claim 1,
**characterized in that**
the composite material has carbon fibers having a weight proportion of 40% to 60% as reinforcement fibers.

3. The tilting segment according to claim 2,
**characterized in that**
the composite material has carbon fibers having a weight proportion of 45% to 55% as reinforcement fibers.

4. The tilting segment according to claim 3,
**characterized in that**
the composite material has carbon fibers having a weight proportion of 50%.

5. The tilting segment according to any of claims 1 to 4,
**characterized in that**
the composite material comprises polyether ether ketone or polyacryl ether ketone in addition to carbon fibers.

6. The tilting segment according to any of claims 1 to 5,
**characterized in that**
the segment body (13, 13') is formed by compression.

7. A tilting segment sliding bearing (1, 1') having a plurality of tilting segments (3, 3') arranged on a supporting ring (2, 2'),
**characterized in that**
the tilting segments (3, 3') are formed according to any of claims 1 to 6.

8. The tilting segment sliding bearing according to claim 7,
**characterized in that**
the tilting segments (3) are configured as radial tilting segments (6) of a radial bearing (4) and each have a concave sliding surface (8).

9. The tilting segment sliding bearing according to claim 7,
**characterized in that**
the tilting segments (3') are configured as axial tilting segments (16) of an axial bearing (14) and each have a flat sliding surface (18).

10. The tilting segment sliding bearing according to any of claims 7 to 9,
**characterized in that**
the running surface (9, 9') of a rotating shaft (10) or shaft collar (10') facing the sliding surface (8, 18) has a hard protective coating.

11. The tilting segment sliding bearing according to claim 10,
**characterized in that**
the protective coating is made of a tungsten carbide with portions of cobalt and chromium.

## Revendications

1. Segment basculant (3, 3') pour un palier lisse (1, 1') à segment basculant, comportant un corps de segment (13, 13') destiné à recevoir des forces de palier, le corps de segment (13, 13') étant réalisé en matériau composite renforcé par fibres,
le matériau composite contenant une polyéther-cétone,
**caractérisé en ce que**
le matériau composite présente des fibres de carbone à hauteur de 25 à 70 % en poids en tant que fibres de renforcement,
et **en ce que** les fibres de carbone forment un tissu présentant une orientation parallèle au contour de la surface lisse (8, 18) du corps de segment (13, 13').

2. Segment basculant selon la revendication 1, **caractérisé en ce que** le matériau composite présente des fibres de carbone à hauteur de 40 à 60 % en poids en tant que fibres de renforcement.

3. Segment basculant selon la revendication 2, **caractérisé en ce que** le matériau composite présente des fibres de carbone à hauteur de 45 à 55 % en poids en tant que fibres de renforcement.

4. Segment basculant selon la revendication 3, **caractérisé en ce que** le matériau composite présente des fibres de carbone à hauteur de 50 % en poids.

5. Segment basculant selon l'une des revendications 1 à 4, **caractérisé en ce que** le matériau composite comprend, en plus des fibres de carbone, une polyétheréther-cétone ou une polyacryléther-cétone.

6. Segment basculant selon l'une des revendications 1 à 5, **caractérisé en ce que** le corps de segment (13, 13') est formé par compression.

7. Palier lisse (1, 1') à segment basculant avec une pluralité de segments basculants (3, 3') disposés sur une bague porteuse (2, 2'),
**caractérisé en ce que** les segments basculants (3, 3') sont configurés selon l'une des revendications 1 à 6.

8. Palier lisse à segment basculant selon la revendication 7, **caractérisé en ce que** les segments basculants (3) sont réalisés sous forme de segments basculants radiaux (6) d'un palier radial (4) et présentent respectivement une surface lisse concave (8).

9. Palier lisse à segment basculant selon la revendication 7, **caractérisé en ce que** les segments basculants (3') sont réalisés sous forme de segments basculants axiaux (16) d'un palier axial (14) et présentent respectivement une surface lisse plane (18).

10. Palier lisse à segment basculant selon l'une des revendications 7 à 9, **caractérisé en ce que** la surface de portée (9, 9') d'un arbre rotatif (10) ou d'un collet d'arbre (10') qui est tournée vers la surface lisse (8, 18) présente une couche de protection dure.

11. Palier lisse à segment basculant selon la revendication 10, **caractérisé en ce que** la couche de protection est réalisée en carbure de tungstène avec des parts de cobalt et de chrome.
